# EUROPÄISCHE PATENTSCHRIFT

(11) **EP 4 370 835 B1**
(45) Veröffentlichungstag und Bekanntmachung des Hinweises auf die Patenterteilung: **17.12.2025**
(21) Anmeldenummer: 22741518.9
(22) Anmeldetag: 12.07.2022
(51) Int. Cl.: F24C 15/00, F24C 7/08, H05B 6/80, H05B 6/64

(54) **BELEUCHTUNGSVORRICHTUNG EINES HAUSHALTSGERÄTS**
ILLUMINATION DEVICE OF A HOUSEHOLD APPLIANCE
DISPOSITIF D'ÉCLAIRAGE D'UN APPAREIL ÉLECTROMÉNAGER

(30) Priorität: 12.07.2021 DE 102021207383
(43) Veröffentlichungstag der Anmeldung: 22.05.2024
(73) Patentinhaber: BSH Hausgeräte GmbH, 81739 München (DE)
(72) Erfinder: BEYER, Ludwig, 84558 Kirchweidach (DE); BALZER, Maxim, 83026 Rosenheim (DE); BÄR, Joschka, 83278 Traunstein (DE)
(86) Internationale Anmeldenummer: PCT/EP2022/069369
(87) Internationale Veröffentlichungsnummer: WO 2023/285411

(56) Entgegenhaltungen:
- EP-A2- 2 857 754
- WO-A1-2013/050587
- WO-A1-2017/059914
- DE-A1- 102016 116 446
- DE-U1- 202019 106 170
- DE-U1- 202020 101 175
- JP-U- S5 038 221
- US-A- 503 720
- US-B2- 9 885 469

## Beschreibung

### Technisches Gebiet

Die vorliegende Offenbarung betrifft eine Beleuchtungsvorrichtung eines Haushaltsgeräts mit einem außerhalb eines Innenraums des Haushaltsgeräts angeordneten Leuchtmittel und einer Lichtleitervorrichtung, die vorgesehen und ausgebildet ist, Licht, welches von einer Lichtquelle außerhalb eines Garraumes eines Gargerätes emittiert wird, in den Garraum eines Gargerätes zu leiten.

### Hintergrund der Erfindung

Beleuchtungsvorrichtungen für Gargeräte beinhalten im Allgemeinen eine Lichtquelle, welche das Licht, das zum Ausleuchten des Garraumes vorgesehen ist, emittiert. Heutzutage kommen als Lichtquelle vermehrt Leuchtdioden (LEDs) zum Einsatz. Diese LEDs und zugehörige elektrische Baugruppen werden als Beleuchtungsbaugruppe bezeichnet und sind häufig temperaturempfindlich und dürfen keinen erhöhten Temperaturen ausgesetzt sein. Daher ist es notwendig, dass die Lichtquelle und die zugehörigen elektrischen Baugruppen außerhalb des Garraumes des Gargerätes positioniert sind.

Um das emittierte Licht der Lichtquelle in den Garraum des Gargerätes zu leiten, werden Lichtleiter, insbesondere Glaslichtleiter, eingesetzt. Die Lichtquelle emittiert Licht in den Lichtleiter, welcher das Licht in den Garraum leitet und an einer Auskoppelfläche des Lichtleiters in den Garraum emittiert und diesen ausleuchtet.

Der Lichtleiter wird im Allgemeinen von einem Träger gehalten. Dieser Träger sorgt für eine möglichst gute thermische Entkoppelung zwischen Lichtleiter und der Beleuchtungsbaugruppe. Zusätzlich sichert der Träger den Lichtleiter gegen Herabfallen oder ein missbräuchliches Herausziehen des Lichtleiters durch einen Benutzer des Gargerätes und positioniert den Lichtleiter relativ zu dem Garraum.

Beleuchtungsvorrichtungen für Gargeräte mit einem Lichtleiter sind aus dem Stand der Technik in vielfältiger Art bekannt.

US 9 885 469 B2 offenbart eine Beleuchtungsvorrichtung für ein Gargerät mit einer hülsenförmigen Aufnahme für eine Linse oder eine Glasabdeckung, welche eine Lichtquelle eines Gargeräts abdeckt.

DE 10 2016 116 446 A1 offenbart eine Beleuchtungsvorrichtung für ein Gargerät mit einem Lichtleitstab, wobei Befestigungsarme in Lichtleiternuten des Lichtleitstabs eingreifen.

DE 20 2019 106 170 U1 offenbart einen beweglich in einer Garraumwandung angeordneten Lichtleiter, wobei der Lichtleiter in einer kragenförmigen Aufnahme, welche durch einen Federring gespannt wird, fixiert ist.

WO 2013 / 050 587 A1 offenbart eine medizinische Beleuchtungsvorrichtung, wobei ein Lichtleiter in einem hülsenförmigen Träger aufgenommen und verklebt ist.

WO 2017 / 059 914 A1 offenbart einen Halter für einen Lichtleitstab, wobei der Halter eine Manschettenform aufweist, die den Lichtleitstab umschließt.

DE 20 2020 101 175 U1 beispielsweise offenbart eine Gargeräteleuchte mit einem Träger, der eine Leuchtmittelaufnahme ausbildet, in welchem ein Leuchtmittel in Form einer Platine mit zumindest einer LED einsitzt und einen Aufnahmestutzen aufweist, der über eine Öffnung mit der Aufnahme für das Leuchtmittel verbunden ist, und mit einem Lichtleitstab, der in dem Aufnahmestutzen einsitzt und in welchen das vom Leuchtmittel emittierte Licht durch die Öffnung zwischen Aufnahmestutzen und Leuchtmittelaufnahme eingespeist wird. Der Lichtleitstab ist mittels eines Halteteils auf Seiten des Trägers und eines Umfangsfreischnitts auf Seiten des Lichtleitstabes am Träger gehalten und das Halteteil greift zur Festlegung des Lichtleitstabes am Träger in den Umfangsfreischnitt ein.

Die aus dem Stand der Technik bekannten Beleuchtungsvorrichtungen mit Lichtleitstab setzen jedoch voraus, dass der Lichtleiter, um befestigt werden zu können, in seiner Geometrie bearbeitet wird. Genauer gesagt wird der Lichtleitstab mit einem Umfangsfreischnitt versehen. Die Bearbeitung von Glas erfordert jedoch aufwendige Herstellungs- bzw. Bearbeitungsverfahren und verursacht damit hohe Bauteilkosten. Zusammenfassung der Erfindung

Aufgabe der Erfindung ist es daher, eine mit industrieüblichen Automatisierungskonzepten realisierbare Lichtleitervorrichtung bereitzustellen, welche den Lichtleiter mit einem Träger oder einer Haltevorrichtung versieht, ohne nachträglich den Lichtleiter bearbeiten oder dessen Geometrie verändern zu müssen.

Gelöst wird die Aufgabe durch eine Beleuchtungsvorrichtung mit den Merkmalen des Anspruchs 1. Vorteilhafte Weiterbildungen sind jeweils Gegenstand von Unteransprüchen. Gemäß einem Aspekt der Erfindung ist eine Beleuchtungsvorrichtung eines Haushaltsgeräts mit einem außerhalb eines Innenraums des Haushaltsgeräts angeordneten Leuchtmittel und einer Lichtleitervorrichtung zur Leitung von Licht, welches von einer Lichtquelle/ dem Leuchtmittel emittiert wird, in den Innenraum des Haushaltsgeräts, insbesondere eines Garraums eines Gargeräts, vorgesehen, die einen Lichtleiter und einen Träger aufweist. Der (Glas-)Lichtleiter ist vorgesehen und ausgebildet, Licht, welches an einem ersten Ende des Lichtleiters in den Lichtleiter eingebracht wird, an einem zweiten Ende des Lichtleiters zu emittieren. Der Träger weist eine Lichtleiteraufnahme auf, die vorgesehen und ausgebildet ist, den Lichtleiter aufzunehmen und axial, radial und in Umfangsrichtung zu fixieren. Der Lichtleiter weist zwischen dem ersten (axialen) Ende des Lichtleiters und dem zweiten (axialen) Ende des Lichtleiters vorzugsweise einen konstanten Querschnitt bzw. eine zylindrische, insbesondere kreiszylindrische, Mantelfläche auf. Der Träger ist über die Mantelfläche mit dem Lichtleiter verbunden, wobei der Träger als eine Klemmscheibe ausgebildet ist und wobei die Lichtleiteraufnahme des Trägers rotationssymmetrisch ausgebildet ist und die Mantelfläche des Lichtleiters gleichmäßig über den Umfang des Lichtleiters kontaktiert und wobei die Lichtleiteraufnahme mit einer Vielzahl an federelastisch vorgespannten Klemmlaschen ausgebildet ist, die den Lichtleiter ausschließlich kraftschlüssig in dem Träger fixieren.

In anderen Worten beinhaltet die Lichtleitervorrichtung einen zylindrischen Lichtleiter und einen rotationssymmetrischen Träger. Der Träger fungiert als ein Verbindungs- oder Halteelement, mittels dem der Lichtleiter in einer Beleuchtungsvorrichtung des Haushaltsgeräts oder unmittelbar am Haushaltsgerät fixiert werden kann.

Der Träger ist vorgesehen und ausgebildet, den Lichtleiter in seiner Position, insbesondere radial und axial, zu fixieren. Hierfür ist an dem Träger die Lichtleiteraufnahme ausgebildet, die den Lichtleiter, der zwischen dem ersten Ende und dem zweiten Ende einen konstanten Durchmesser aufweist, aufnimmt. Die Lichtleiteraufnahme ist in ihrem Durchmesser auf den konstanten Durchmesser des Lichtleiters abgestimmt. Durch die einfache Geometrie, insbesondere mit einer kreiszylindrischen Mantelfläche bzw. mit dem konstanten Durchmesser, ist der Lichtleiter einfach und kostengünstig herzustellen. Explizit kann auf nachträgliche, aufwändige Bearbeitungsschritte, die die Geometrie des Lichtleiters verändern, verzichtet werden.

Neben der Ausbildung des Lichtleiters mit einem konstanten Querschnitt sind auch Ausführungsformen vorstellbar, in welchen der Lichtleiter freigeformt ist und/oder einen konischen Verlauf aufweist. In anderen Worten verändert sich in einer derartigen Ausführungsform der Querschnitt des Lichtleiters entlang einer Längserstreckung des Lichtleiters. Bevorzugt weist der Lichtleiter bei einer derartigen Ausführungsform einen Kontaktabschnitt auf, in welchem der Querschnitt konstant ausgebildet ist.

Der Träger kann rotationssymmetrisch, bezogen auf eine Mittelfaser der Lichtleiteraufnahme, ausgebildet sein, so dass er in jedem beliebigen Verdrehwinkel, bezogen auf die Mittelfaser der Lichtleiteraufnahme, auf den Lichtleiter montiert/angebracht werden kann. Die Symmetrie des Trägers erleichtert die Montage des Trägers auf dem Lichtleiter und das Risiko eines Montagefehlers kann effektiv gesenkt werden.

Erfindungsgemäß ist der Träger als Klemmscheibe und die Lichtleiteraufnahme des Trägers mit einer Vielzahl an federelastisch vorgespannten Klemmlaschen/Zackenlaschen ausgebildet, die den Lichtleiter ausschließlich kraftschlüssig in dem Träger fixieren.

In anderen Worten weist die Lichtleiteraufnahme eine Grundgeometrie auf, die vorzugsweise der Geometrie eines Querschnitts des Lichtleiters entspricht. An einer zu einem Mittelpunkt des Trägers hin orientierten Abschnitt des Trägers ist sind mehrere Klemmlaschen ausgebildet, die stoffeinstückig mit dem Träger ausgebildet sind. Die Klemmlaschen können kreisringsegmentförmig ausgebildet und in Umfangsrichtung des Trägers gleichmäßig angeordnet und zueinander beabstandet sein. Da die Klemmabschnitte bzw. Klemmlaschen gleichmäßig verteilt sind, kontaktiert der Träger die Mantelfläche des Lichtleiters gleichmäßig über dessen Umfang und sichert diesen kraftschlüssig, genauer gesagt reibschlüssig, in axialer, radialer und in Umfangsrichtung. In einer alternativen Ausführungsform weisen die Klemmlaschen vorzugsweise eine Form eines gleichschenkligen Dreiecks auf, wobei die einer Basis des gleichschenkligen Dreiecks gegenüberliegende Spitze vorzugsweise zu dem Mittelpunkt des Trägers hin orientiert ist. Durch die Ausbildung der Lichtleiteraufnahme mit Klemmlaschen ist eine einfache und werkzeuglose Montage des Trägers auf dem Lichtleiter gewährleistet, da der Lichtleiter lediglich in die Lichtleiteraufnahme des Träger geschoben werden muss.

In einer alternativen Ausführungsform kann zumindest eine Klemmlasche an einer Seite der Lichtleiteraufnahme ausgebildet sein und den Lichtleiter gegen eine Anlagefläche verspannen.

Die Geometrie der einzelnen Klemmlasche kann alternativ oder zusätzlich an eine Geometrie des Lichtleiters und/oder an ein Herstellverfahren der Klemmlaschen angepasst sein.

Der Träger insgesamt kann aus einem elastischen Material ausgebildet sein oder mittels eines Federelements elastisch an dem Träger gelagert sein, um eine entsprechende Klemmkraft auf den Lichtleiter aufbringen zu können. In einem montierten Zustand kann zwischen den Klemmlaschen und der Mantelfläche des Lichtleiters ein spitzer Winkel ausgebildet sein. Durch die Vorspannung der Klemmlaschen in Verbindung mit einem Reibungskoeffizienten zwischen der Laschenkante der Klemmlasche und der korrespondierenden Mantelfläche des Lichtleiters ist eine kraftschlüssige Verbindung zwischen Lichtleiter und Träger gewährleistet und der Träger gegen den Lichtleiter in axialer und radialer Richtung festgestellt. Zusätzlich kann der Lichtleiter durch die elastisch gespannten Klemmlaschen mittig in dem Träger ausgerichtet bzw. zentriert werden.

Der Träger kann eine im Wesentlichen runde Außengeometrie aufweisen. Vorzugsweise kann die Außengeometrie des Trägers eine elliptische Form aufweisen.

Die einzelnen Klemmlaschen können durch Freiflächen voneinander beabstandet sein. Die Freiflächen können an einem der Außengeometrie des Trägers zugewandten Abschnitt mit einem Radius ausgebildet sein.

Gemäß einem anderen Aspekt kann die Lichtleiteraufnahme des Trägers so auf den Querschnitt des Lichtleiters abgestimmt sein, dass der Lichtleiter mittels einer thermischen Pressverbindung in der Lichtleiteraufnahme fixiert werden kann, so dass der Lichtleiter ausschließlich kraftschlüssig in dem Träger fixiert werden kann.

In anderen Worten kann die Lichtleiteraufnahme des Trägers eine Geometrie aufweisen, die der Geometrie des Querschnitts des Lichtleiters entspricht. Ein Innendurchmesser der Lichtleiteraufnahme ist in einem unmontierten Zustand kleiner als ein Durchmesser des Lichtleiters. In nochmals anderen Worten kann die Querschnittsfläche des Lichtleiters größer als eine Innenfläche, die von der Lichtleiteraufnahme des Trägers in einem unmontierten Zustand eingeschlossen ist, sein. Durch ein Aufschrumpfen des Trägers auf den Lichtleiter ist eine Flächenpressung durch den Träger ausgebildet, welche eine kraftschlüssige Verbindung zwischen dem Träger und dem Lichtleiter ausbildet und den Träger und den Lichtleiter axial und radial gegeneinander feststellt.

Gemäß einem anderen Aspekt, der nicht Teil der beanspruchten Erfindung ist, kann die Lichtleiteraufnahme des Trägers als Klebefläche ausgebildet sein, welche vorgesehen und ausgebildet ist, mittels einer ausschließlich stoffschlüssigen Verbindung den Lichtleiter in dem Träger zu fixieren.

In anderen Worten kann die Lichtleiteraufnahme des Trägers eine Geometrie aufweisen, die der Geometrie des Querschnitts des Lichtleiters entspricht. Ein Innendurchmesser der Lichtleiteraufnahme ist in einem unmontierten Zustand geringfügig größer als ein Durchmesser des Lichtleiters. Der Zwischenraum, der zwischen der Lichtleiteraufnahme des Trägers und dem Lichtleiter ausgebildet ist, ist mit einem Klebstoff gefüllt, der den Träger und den Lichtleiter stoffschlüssig verbindet. Durch ein Einkleben des Lichtleiters in den Träger auf den Lichtleiter ist eine stoffschlüssige Verbindung zwischen dem Träger und dem Lichtleiter ausgebildet und der Träger und der Lichtleiter axial und radial gegeneinander festgestellt.

Gemäß einem weiteren Aspekt, der nicht Teil der beanspruchten Erfindung ist, ist der Lichtleiter mittels In-Mold-Spritzgießen bzw. Montagespritzgießen ausschließlich stoffschlüssig in der Lichtleiteraufnahme des Trägers fixiert.

In anderen Worten kann der Träger aus Kunststoff direkt an/auf die Mantelfläche des Lichtleiters angeformt werden. Hierfür wird der Lichtleiter in die Spritzgussform des Trägers eingelegt und der Träger dann mit dem Lichtleiter einstückig ausgebildet. Durch das Ausbilden des Trägers direkt an dem Lichtleiter können Arbeits- bzw. Montageschritte reduziert werden.

Gemäß einem weiteren Aspekt kann die Oberfläche der Mantelfläche des Lichtleiters in einem Kontaktabschnitt des Lichtleiters eine erhöhte Oberflächenrauheit/einen erhöhten Rauheitskoeffizienten, verglichen mit der restlichen Mantelfläche des Lichtleiters, aufweisen.

In anderen Worten kann die Oberfläche des Lichtleiters in einem Abschnitt, an dem der Träger den Lichtleiter kontaktiert bzw. hält, verglichen mit anderen Abschnitten des Trägers, vorzugsweise durch Schleifen, Bürsten, Ätzen und/oder Sandstrahlen, aufgeraut sein. Durch die erhöhte Oberflächenrauheit kann die Reibung und damit die bei einer kraftschlüssigen Verbindung übertragbare Kraft zwischen dem Träger und dem Lichtleiter erhöht werden.

Gemäß einem weiteren Aspekt kann der Träger einstückig ausgebildet sein. In anderen Worten kann es sich bei dem Träger um ein einzelnes Bauteil handeln, das vorzugsweise mittels Drehen, im Spritzgussverfahren, durch Stanzen oder dergleichen hergestellt ist. Vorzugsweise ist der Träger stoffeinstückig ausgebildet. Die einstückige Ausbildung erleichtert die Montage und reduziert Montageschritte. Zusätzlich ist das Risiko etwaiger Schwachstellen, die beim Fügen mehrerer Bauteile entstehen können, minimiert.

Gemäß einem weiteren Aspekt kann eine von dem Lichtleiter radial abgewandte Außengeometrie des Trägers dafür vorgesehen und ausgebildet sein, die Lichtleitervorrichtung in einer Beleuchtungsvorrichtung des Haushaltsgeräts oder an einem Gehäuse oder einem weiteren Halter zu fixieren. In anderen Worten kann der Träger eine Außengeometrie aufweisen, mit der der Lichtleiter in/an der Beleuchtungsvorrichtung befestigt werden kann. Die Geometrie der Außengeometrie ist dabei vorzugsweise an die Geometrie einer Aufnahme der Beleuchtungsvorrichtung angepasst, die vorgesehen und ausgebildet ist, die Lichtleitervorrichtung aufzunehmen.

Gemäß einer ersten Ausführungsform ist eine Lichtleitervorrichtung vorgesehen, welche Licht, welches von einer Lichtquelle emittiert wird, in einen Innenraum eines Haushaltsgeräts, insbesondere in einen Garraum eines Gargeräts leiten kann und einen (Glas-)Lichtleiter, der vorgesehen und ausgebildet ist, das Licht, welches an einem ersten Ende des Lichtleiters in den Lichtleiter eingebracht wird, an einem zweiten Ende des Lichtleiters zu emittieren, und einen Träger aufweist, um den Lichtleiter axial sowie radial zu fixieren, wobei der Lichtleiter zwischen dem ersten Ende und dem zweiten Ende einen konstanten Querschnitt aufweist und der Träger als Klemmscheibe mit einer Vielzahl an radial elastisch vorgespannten Klemmabschnitten, insbesondere Klemmlaschen, ausgebildet sind, welche den Lichtleiter ausschließlich kraftschlüssig halten.

Gemäß einer zweiten Ausführungsform, die nicht Teil der beanspruchten Erfindung ist, ist eine Lichtleitervorrichtung vorgesehen, welche Licht, welches von einer Lichtquelle emittiert wird, in einen Innenraum eines Haushaltsgeräts, insbesondere in einen Garraum eines Gargeräts leiten kann und einen (Glas-)Lichtleiter, der vorgesehen und ausgebildet ist, das Licht, welches an einem ersten Ende des Lichtleiters in den Lichtleiter eingebracht wird, an einem zweiten Ende des Lichtleiters zu emittieren, und einen Träger aufweist, um den Lichtleiter axial sowie radial zu fixieren, wobei der Lichtleiter zwischen dem ersten Ende und dem zweiten Ende einen konstanten Querschnitt aufweist und der Träger so ausgebildet ist und auf den Querschnitt des Lichtleiters angepasst ist, um den Lichtleiter mittels eines thermischen Presssitzes zwischen Träger und Lichtleiter ausschließlich kraftschlüssig zu halten. Anders ausgedrückt ist der Träger auf den Lichtleiter aufgeschrumpft, sodass eine kraftschlüssige Verbindung zwischen dem Träger und dem Lichtleiter besteht und der Träger und der Lichtleiter radial sowie axial zueinander fixiert sind.

Gemäß einer dritten Ausführungsform, die nicht Teil der beanspruchten Erfindung ist, ist eine Lichtleitervorrichtung vorgesehen, welche Licht, welches von einer Lichtquelle emittiert wird, in einen Innenraum eines Haushaltsgeräts, insbesondere in einen Garraum eines Gargeräts leiten kann und einen (Glas-)Lichtleiter, der vorgesehen und ausgebildet ist, das Licht, welches an einem ersten Ende des Lichtleiters in den Lichtleiter eingebracht wird, an einem zweiten Ende des Lichtleiters zu emittieren, und einen Träger aufweist, um den Lichtleiter axial sowie radial zu fixieren, wobei der Lichtleiter zwischen dem ersten Ende und dem zweiten Ende einen konstanten Querschnitt aufweist und der Träger so ausgebildet ist und auf den Querschnitt des Lichtleiters angepasst ist, um den Lichtleiter ausschließlich stoffschlüssig, insbesondere mittels eines Klebeverbindung, in dem Träger zu fixieren. Der Träger und der Lichtleiter werden mittels Klebstoff, der den Träger und den Lichtleiter über die Kontaktfläche stoffschlüssig verbindet, axial sowie radial zueinander fixiert.

Gemäß einer vierten Ausführungsform, die nicht Teil der beanspruchten Erfindung ist, ist eine Lichtleitervorrichtung vorgesehen, welche Licht, welches von einer Lichtquelle emittiert wird, in einen Innenraum eines Haushaltsgeräts, insbesondere in einen Garraum eines Gargeräts leiten kann und einen (Glas-)Lichtleiter, der vorgesehen und ausgebildet ist, das Licht, welches an einem ersten Ende des Lichtleiters in den Lichtleiter eingebracht wird, an einem zweiten Ende des Lichtleiters zu emittieren, und einen Träger aufweist, um denLichtleiter axial sowie radial zu fixieren, wobei der Lichtleiter zwischen dem ersten Ende und dem zweiten Ende einen konstanten Querschnitt aufweist und der Träger auf den Lichtleiter im Spritzgießverfahren, insbesondere im In-Mold-Verfahren, aufgespritzt ist. In anderen Worten ist der Träger mittels Spritzgießen (In-Mold Verfahren) an den Lichtleiter ausgebildet. Der Träger und der Lichtleiter sind hierbei stoffschlüssig verbunden und axial sowie radial zueinander fixiert.

Erfindungsgemäß ist eine Beleuchtungsvorrichtung eines Haushaltsgerätes vorgesehen, welche ein außerhalb eines Innenraums des Haushaltsgeräts, insbesondere Garraums des Gargeräts, angeordnetes Leuchtmittel und eine Lichtleitervorrichtung gemäß einem der vorherigen Aspekte aufweist. Die Lichtleitervorrichtung ist dafür vorgesehen, den Lichtleiter, der das Licht, welches von dem Leuchtmittel emittiert wird, in den Innenraum des Haushaltsgerätes leitet, in der Beleuchtungsvorrichtung zu fixieren. Das Leuchtmittel, insbesondere in Form einer LED, ist vorzugsweise mit einer Platine in der Beleuchtungsvorrichtung untergebracht und emittiert das Licht in das erste Ende des Lichtleiters, welches sich in einem montierten Zustand vorzugsweise außerhalb des Garraumes befindet. Der Lichtleiter leitet das Licht und gibt es an seinem zweiten Ende, das sich vorzugsweise in dem montierten Zustand innerhalb des Garraumes befindet, an die Umgebung, insbesondere an der Garraum ab.

### Kurzbeschreibung der Figuren

- Fig. 1: ist eine Darstellung eines Trägers gemäß einer ersten Ausführungsform.
- Fig. 2: ist eine Darstellung einer radialen Ansicht eines auf einem Lichtleiter montierten Trägers gemäß der ersten Ausführungsform.
- Fig. 3: ist eine Darstellung einer axialen Ansicht des auf dem Lichtleiter montierten Trägers gemäß der ersten Ausführungsform.
- Fig. 4: ist eine Darstellung einer radialen Ansicht des auf dem Lichtleiter montierten Trägers gemäß einer zweiten Ausführungsform.
- Fig. 5: ist eine Darstellung einer axialen Ansicht des auf dem Lichtleiter montierten Trägers gemäß der zweiten Ausführungsform.
- Fig. 6: ist eine Darstellung einer modifizierten Ausführungsform des Trägers in einer Draufsicht.
- Fig. 7: ist eine Darstellung einer modifizierten Ausführungsform des Trägers in einer Untersicht.

### Detailierte Beschreibung von Ausführungsbeispielen

Nachstehend werden Ausführungsbeispiele der vorliegenden Offenbarung auf der Basis der zugehörigen Figuren beschrieben.

### Erstes Ausführungsbeispiel

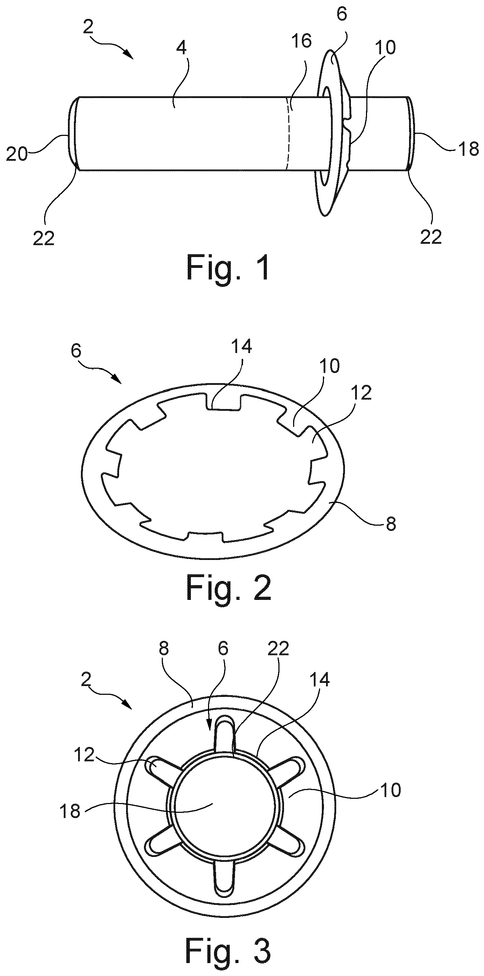

Fig. 1 zeigt eine Seitenansicht einer erfindungsgemäßen Lichtleitervorrichtung 2 gemäß einer ersten Ausführungsform. Die Lichtleitervorrichtung 2 weist einen Lichtleiter 4 und einen Träger 6 auf. Der Träger 6 trägt einerseits den Lichtleiter 4 und ist andererseits mit einem (nicht gezeigten) Haushaltsgerät gekoppelt oder koppelbar, um über den Träger 6 den Lichtleiter 4 mittelbar oder unmittelbar an oder in dem Haushaltsgerät fixieren zu können.

Fig. 2 zeigt nur den Träger 6, der als eine Klemmscheibe / ein Zackenring ausgebildet ist. Vorzugsweise ist der Träger bzw. die Klemmscheibe 6 ringförmig / kreisförmig ausgebildet und weist einen Ring oder eine ringförmigen Halterung 8 auf, die dafür vorgesehen und ausgebildet ist, die Lichtleitervorrichtung 2 an einer Beleuchtungsvorrichtung des Haushaltsgeräts zu fixieren. Die Klemmscheibe 6 ist zur Ringmitte hin mit einer Lichtleiteraufnahme versehen, wobei die Lichtleiteraufnahme als an der Ringinnenseite der Klemmscheibe 6 umlaufend angeordnete Klemmlaschen / Scheibenlaschen 10 mit dazwischen angeordneten Freiräumen 12 ausgebildet ist, die mit einem Innenumfang der ringförmigen Halterung 8 (einstückig) verbunden sind. Die Klemmlaschen 10 sind gleichmäßig über den Innenumfang der Klemmscheibe 6 verteilt und elastisch mit der ringförmigen Halterung 8 verbunden. Die Klemmlaschen 10 erstrecken sich von dem Innenumfang der Klemmscheibe 6 ausgehend in Richtung eines auf einer Mittelachse der Klemmscheibe 6 liegenden Orientierungspunktes. Die Mittelachse verläuft durch den projizierten Mittelpunkt der Klemmscheibe 6. Weiterhin ist die Mittelachse normal zu der runden Klemmscheibe 6 orientiert/angeordnet. Bevorzugt sind die Klemmlaschen 10 in einem Winkel zu der Klemmscheibe 6 angeordnet. In anderen Worten sind der projizierte Mittelpunkt der Klemmscheibe 6 und der Orientierungspunkt voneinander beabstandet.

Der Lichtleiter 4 ist stabförmig und aus Glas hergestellt. Er hat über seine axiale Erstreckung einen konstanten Querschnitt bzw. er ist (kreis-)zylindrisch. Der Lichtleiter 4 kann in axialer Richtung Licht leiten. Wie in der Fig. 1 zu erkennen ist, liegen die Klemmlaschen 10 der Klemmscheibe 6 mit einer von der ringförmigen Halterung 8 abgewandten Laschenkante 14 an dem Lichtleiter 4 an. In anderen Worten ist die Laschenkante 14 zu dem projizierten Mittelpunkt der Klemmscheibe 6 hin orientiert. Der Innendurchmesser der Klemmlaschen 10 bzw. der Durchmesser der Laschenkanten 14 ist kleiner als der Durchmesser des Lichtleiters 4, weshalb die Klemmlaschen 10 elastisch vorgespannt in einem spitzen Winkel an einer Mantelfläche des Lichtleiters 4 anliegen. Vorzugsweise ist die Mantelfläche des Lichtleiters 4 in einem Klemmabschnitt 16 mit einer erhöhten Oberflächenrauheit versehen als an anderer Stelle. Eine Vorspannkraft sowie der Reibungskoeffizient zwischen der Laschenkante 14 und der Mantelfläche in dem Klemmabschnitt 16 des Lichtleiters 4 sorgen für eine kraftschlüssige Verbindung zwischen dem Lichtleiter 4 und der Klemmscheibe 6. Diese kraftschlüssige Verbindung sorgt dafür, dass die Klemmscheibe 6 und der Lichtleiter 4 in axialer und radialer Richtung gegeneinander fixiert sind. Der Lichtleiter 4 ist an einem ersten Ende / an einer ersten Endfläche 18 und an einem zweiten Ende / an einer zweiten Endfläche 20 mit einer Montagefase 22 versehen.

Fig. 3 zeigt eine axiale Ansicht der erfindungsgemäßen Lichtleitervorrichtung 2 der ersten Ausführungsform. Die Klemmlaschen 10 liegen mit der zur Mitte der vorzugsweise runden Klemmscheibe 6 orientierten Laschenkanten 14 an dem Lichtleiter 4 an. Vorzugsweise hat die Laschenkante 14 eine Rundung, die der Rundung der Mantelfläche des Lichtleiters 4 entspricht, sodass die Laschenkante 14 vollständig an der Mantelfläche des Lichtleiters anliegt. Die einzelnen Klemmlaschen 10 sind durch die Freiräume 12 voneinander in Umfangsrichtung beabstandet. Die ringförmige Halterung 8 der Klemmscheibe 6 ist an der radial von dem Lichtleiter 4 abgewandten Seite der Klemmscheibe 6 vorgesehen. Vorzugsweise ist die ringförmige Halterung 8 in einem montierten Zustand parallel zu der ersten Endfläche 18 und der zweiten Endfläche 20 orientiert bzw. in einer zur Achse des Lichtleiters 4 senkrechten Ebene.

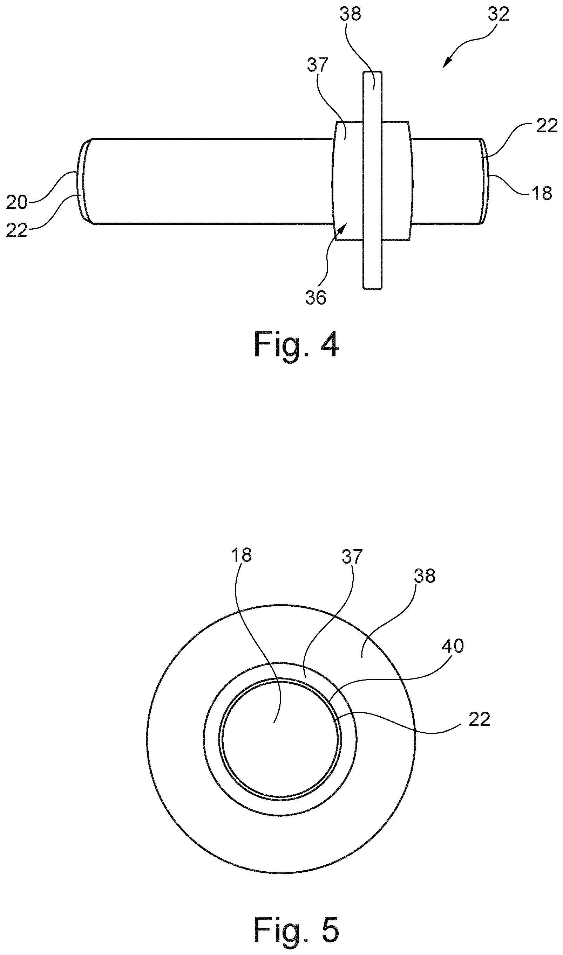

Zweites Ausführungsbeispiel, welches nicht Teil der beanspruchten Erfindung ist Fig. 4 zeigt eine Seitenansicht einer erfindungsgemäßen Lichtleitervorrichtung 32 gemäß einer zweiten Ausführungsform. Die zweite Ausführungsform unterscheidet sich von der ersten Ausführungsform nur in dem Träger, d.h. der Lichtleiter 4 der zweiten Ausführungsform ist identisch mit dem Lichtleiter 4 der ersten Ausführungsform, weshalb die Beschreibung des Lichtleiters 4 nicht wiederholt wird.

Bei der zweiten Ausführungsform ist der Träger als ein Hülsenträger 36 ausgebildet. Der Hülsenträger 36 beinhaltet eine Hülse 37 und einen Flansch 38, der mittig auf der Hülse 37 angeordnet ist. Die Hülse 37 ist vorzugsweise vorgesehen und ausgebildet, eine kraftschlüssige Verbindung zwischen Hülsenträger 36 und Lichtleiter 4 herzustellen. Diese kraftschlüssige Verbindung zwischen Hülsenträger 36 und Lichtleiter 4 wird mittels eines thermischen Presssitzes erzielt. Der Innendurchmesser der Hülse 37 ist hierbei in einem unmontierten Zustand geringer als der Außendurchmesser des Lichtleiters 4. Die kraftschlüssige Verbindung sorgt dafür, dass der Hülsenträger 36 und der Lichtleiter 4 in axialer und radialer Richtung gegeneinander fixiert sind. Die Flansch 38 ist an der radial von dem Lichtleiter 4 abgewandten Seite des Hülsenträgers 36 vorgesehen. Vorzugsweise ist der Durchmesser des Flansch 38 größer als der Durchmesser der Hülse 37. Außerdem vorzugsweise ist die axiale Ausdehnung der Hülse 37 größer als die axiale Ausdehnung des Flansch 38. Vorzugsweise ist der Flansch 38 parallel zu der ersten Endfläche 18 und der zweiten Endfläche 20 orientiert. Beispielsweise ist der Hülsenträger 36 aus Metall gefertigt.

Fig. 5 zeigt eine axiale Ansicht der erfindungsgemäßen Lichtleitervorrichtung 32 der zweiten Ausführungsform. Eine innere Hülsenfläche 40 des Hülsenträgers 36 liegt an der Mantelfläche des Lichtleiters 4 an. In anderen Worten kontaktiert die innere Hülsenfläche 40 des Hülsenträgers 36 den Lichtleiter 4 vollumfänglich über die axiale Länge der Hülse 37. Der Hülsenträger 36 ist einstückig ausgeführt, kann jedoch auch mehrteilig ausgeführt sein.

### Modifizierte Ausführungsbeispiele

Gemäß einer modifizierten Ausführungsform, die nicht Teil der beanspruchten Erfindung ist, können der Hülsenträger 36 und der Lichtleiter 4 durch eine Klebeverbindung verbunden sein. Hierbei wird ein Klebstoff auf die innere Hülsenfläche 40 der Hülse 37 aufgebracht und die Hülse 37 anschließend auf den Lichtleiter 4 aufgeschoben. Der Innendurchmesser der Hülse 37 ist hierbei in einem unmontierten Zustand größer als der Außendurchmesser des Lichtleiters. Nach Aushärtung des Klebstoffes sind der Hülsenträger 36 und der Lichtleiter 4 stoffschlüssig verbunden. Die stoffschlüssige Verbindung sorgt dafür, dass der Hülsenträger 36 und der Lichtleiter 4 in axialer und radialer Richtung gegeneinander fixiert sind. Beispielsweise ist der Hülsenträger 36 aus Metall, einer Keramik oder einem Kunststoff gefertigt.

Gemäß einer weiteren modifizierten Ausführungsform, die nicht Teil der beanspruchten Erfindung ist, können der Hülsenträger 36 und der Lichtleiter 4 durch eine "In-Mold"-Verbindung verbunden sein (Montagespritzgießverfahren). Hierbei wird der Lichtleiter 4 in ein Spritzgießwerkzeug eingelegt und der Hülsenträger 36 in einem Spritzgießverfahren um den Lichtleiter 4 herum in dem Spritzgießwerkzeug geformt. Der Lichtleiter 4 und der Hülsenträger 36 werden hierbei stoffschlüssig miteinander verbunden. Die stoffschlüssige Verbindung sorgt dafür, dass der Hülsenträger 36 und der Lichtleiter 4 in axialer und radialer Richtung gegeneinander fixiert sind.

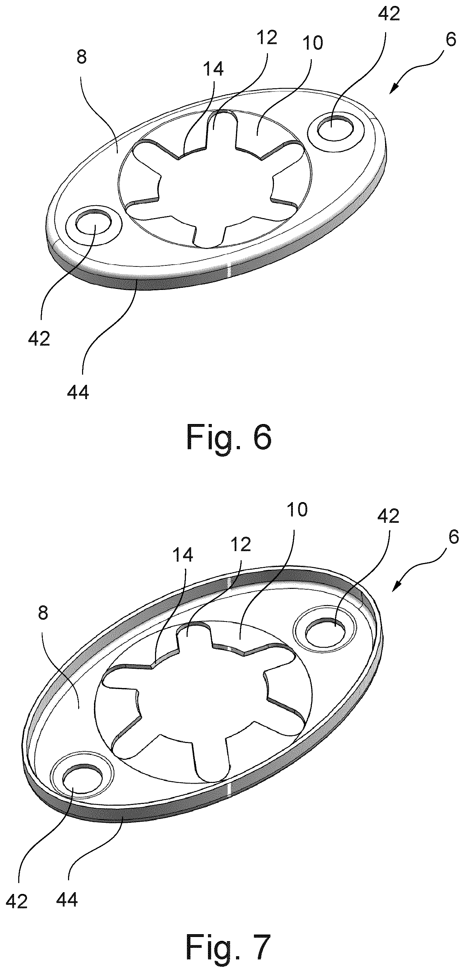

Fig. 6 zeigt eine modifizierte Ausführungsform des Trägers 6 aus Fig. 2 in einer Draufsicht und Fig. 7 zeigt die modifizierte Ausführungsform in einer Untersicht. Die Halterung 8 weist im Unterschied zu der in Fig. 2 dargestellten Ausführungsform eine elliptische Form auf. In der Halterung 8 sind zwei Schraublöcher 42 ausgebildet, mit welchen der Träger 6 beispielsweise an der Beleuchtungsvorrichtung des Haushaltsgeräts fixiert werden kann. Alternativ kann der Träger 6 auch direkt an einer Haushalsgerätewandung verschraubt werden. An einem Außenumfang der Halterung 8 ist ein Außenrand 44 ausgebildet, der sich normal zu einer flächigen Erstreckung der Halterung 8 weg von der Halterung 8 erstreckt.

### Bezugszeichenliste

- 2: Lichtleitervorrichtung (erste Ausführungsform)
- 4: Lichtleiter
- 6: Träger
- 8: ringförmige Halterung
- 10: Klemmlasche / Scheibenlasche
- 12: Freiraum
- 14: Laschenkante
- 16: Klemmabschnitt
- 18: erste Endfläche
- 20: zweite Endfläche
- 22: Montagefase
- 32: Lichtleitervorrichtung (zweite Ausführungsform)
- 36: Hülsenträger
- 37: Hülse
- 38: Flansch
- 40: innere Hülsenfläche
- 42: Schraubloch
- 44: Außenrand

## Patentansprüche

1. Beleuchtungsvorrichtung eines Haushaltsgeräts mit einem außerhalb eines Innenraums des Haushaltsgeräts angeordneten Leuchtmittel und einer Lichtleitervorrichtung (2; 32) zur Leitung von Licht, welches von dem Leuchtmittel emittiert wird, in den Innenraum des Haushaltsgeräts, insbesondere eines Garraums eines Gargeräts, mit
einem Lichtleiter (4), insbesondere einem Glaslichtleiter, welcher vorgesehen und ausgebildet ist, Licht, welches an einem ersten Ende des Lichtleiters (18) in den Lichtleiter (4) eingebracht wird, an einem zweiten Ende des Lichtleiters (20) zu emittieren, und
einem mit dem Haushaltsgerät direkt oder indirekt gekoppelten oder koppelbaren Träger (6; 36), welcher eine Lichtleiteraufnahme aufweist und dafür vorgesehen und ausgebildet ist, den Lichtleiter (4) aufzunehmen und axial sowie radial zu fixieren,
wobei der Lichtleiter (4) zwischen dem ersten Ende des Lichtleiters (18) und dem zweiten Ende des Lichtleiters (20) eine zylindrische, insbesondere kreiszylindrische, Mantelfläche aufweist und der Träger (6; 36) über die Mantelfläche mit dem Lichtleiter (4) verbunden ist, **dadurch gekennzeichnet, dass** der Träger als eine Klemmscheibe ausgebildet ist und wobei die Lichtleiteraufnahme des Trägers (6; 36) rotationssymmetrisch ausgebildet ist und die Mantelfläche des Lichtleiters (4) gleichmäßig über den Umfang des Lichtleiters (4) kontaktiert und wobei die Lichtleiteraufnahme mit einer Vielzahl an federelastisch vorgespannten Klemmlaschen ausgebildet ist, die den Lichtleiter ausschließlich kraftschlüssig in dem Träger fixieren.

2. Beleuchtungsvorrichtung nach Anspruch 1, **dadurch gekennzeichnet, dass** zumindest eine Klemmlasche (10) in spitzem Winkel an der Mantelfläche des Lichtleiters (4) anliegt.

3. Beleuchtungsvorrichtung nach Anspruch 1 oder 2, **dadurch gekennzeichnet, dass** zumindest eine Klemmlasche (10) eine Laschenkante (14) beinhaltet, welche in ihrer Geometrie auf eine Außenkontur des Lichtleiters (4) abgestimmt ist.

4. Beleuchtungsvorrichtung nach einem der Ansprüche 1 bis 3, **dadurch gekennzeichnet, dass** zumindest eine Klemmlasche (10) den Lichtleiter (4) gegen eine Anlagefläche verspannt.

5. Beleuchtungsvorrichtung nach einem der Ansprüche 1 bis 3, **dadurch gekennzeichnet, dass** die Klemmlaschen den Lichtleiter (4) gleichmäßig über den Umfang des Lichtleiters (4) kontaktieren.

6. Beleuchtungsvorrichtung nach einem der Ansprüche 1 bis 5, **dadurch gekennzeichnet, dass** die Oberfläche der Mantelfläche des Lichtleiters (4) in einem Kontaktabschnitt (16) des Lichtleiters (4) eine erhöhte Oberflächenrauheit/einen erhöhten Rauheitskoeffizienten, verglichen mit einem nicht Kontaktabschnitt des Lichtleiters (4), aufweist.

7. Beleuchtungsvorrichtung nach einem der Ansprüche 1 bis 6, **dadurch gekennzeichnet, dass** der Träger (6; 36) rotationssymmetrisch, bezogen auf eine Mittelfaser der Lichtleiteraufnahme, ausgebildet ist.

8. Beleuchtungsvorrichtung nach einem der Ansprüche 1 bis 7, **dadurch gekennzeichnet, dass** der Träger (6; 36) einstückig ausgebildet ist.

9. Beleuchtungsvorrichtung nach einem der Ansprüche 1 bis 8, **dadurch gekennzeichnet, dass** eine von dem Lichtleiter (4) abgewandte Außengeometrie (8; 38) des Trägers (6) dafür vorgesehen und ausgebildet ist, die Lichtleitervorrichtung (2; 32) in einer Beleuchtungsvorrichtung des Haushaltsgeräts zu fixieren.

## Claims

1. Lighting device of a household appliance with an illuminant arranged outside of an interior space of the household appliance and an optical waveguide device (2; 32) for guiding light, which is emitted from the illuminant, into the interior space of the household appliance, in particular a cooking chamber of a cooking appliance, having an optical waveguide (4), in particular a glass optical waveguide, which is provided and embodied to emit light, which is introduced into the optical waveguide (4) at a first end of the optical waveguide (18), to a second end of the optical waveguide (20), and
a carrier (6; 36) which is coupled or can be coupled directly or indirectly to the household appliance, which has an optical waveguide receptacle and is provided and embodied to receive the optical waveguide (4) and to fix the same axially and radially,
wherein the optical waveguide (4) between the first end of the optical waveguide (18) and the second end of the optical waveguide (20) has a cylindrical, in particular circular cylindrical, outer surface and the carrier (6; 36) is connected to the optical waveguide (4) by way of the outer surface, **characterised in that** the carrier is embodied as a clamping disc and wherein the optical waveguide receptacle of the carrier (6; 36) is embodied to be rotationally symmetrical and the outer surface of the optical waveguide (4) makes uniform contact over the periphery of the optical waveguide (4) and wherein the optical waveguide receptacle is embodied with a plurality of clamping lugs pretensioned in a spring-elastic manner which fix the optical waveguide in the carrier by means of an exclusively force-fit connection.

2. Lighting device according to claim 1, **characterised in that** at least one clamping lug (10) rests at an acute angle against the outer surface of the optical waveguide (4).

3. Lighting device according to claim 1 or 2, **characterised in that** at least one clamping lug (10) contains a lug edge (14) which is matched to an outer contour of the optical waveguide (4) in terms of its geometry.

4. Lighting device according to one of claims 1 to 3, **characterised in that** at least one clamping lug (10) pretensions the optical waveguide (4) against a contact surface.

5. Lighting device according to one of claims 1 to 3, **characterised in that** the clamping lugs make uniform contact with the optical waveguide (4) over the periphery of the optical waveguide (4).

6. Lighting device according to one of claims 1 to 5, **characterised in that** the surface of the outer surface of the optical waveguide (4) in a contact section (16) of the optical waveguide (4) has an increased surface roughness/an increased coefficient of roughness, compared with a non-contact section of the optical waveguide (4).

7. Lighting device according to one of claims 1 to 6, **characterised in that** the carrier (6; 36) is embodied to be rotationally symmetrical, in respect of a central fibre of the optical waveguide receptacle.

8. Lighting device according to one of claims 1 to 7, **characterised in that** the carrier (6; 36) is embodied in one piece.

9. Lighting device according to one of claims 1 to 8, **characterised in that** an external geometry (8; 38) of the carrier (6) which faces away from the optical waveguide (4) is provided and embodied to fix the optical waveguide device (2; 32) in a lighting device of the household appliance.

## Revendications

1. Dispositif d'éclairage d'un appareil ménager avec un agent lumineux disposé à l'extérieur d'un espace intérieur de l'appareil ménager et un dispositif de conduit de lumière (2 ; 32) pour le guidage de la lumière émise par l'agent lumineux dans l'espace intérieur de l'appareil ménager, en particulier d'un espace de cuisson d'un appareil de cuisson, avec un conduit de lumière (4), en particulier un conduit de lumière en verre, lequel est prévu et formé pour émettre la lumière introduite dans le conduit de lumière (4) en une première extrémité du conduit de lumière (18) à une deuxième extrémité du conduit de lumière (20), et un support (6 ; 36) directement ou indirectement couplé ou couplable avec l'appareil ménager, lequel présente un logement de conduit de lumière et est prévu et formé pour accueillir le conduit de lumière (4) et le fixer axialement et radialement, dans lequel le conduit de lumière (4) présente, entre la première extrémité du conduit de lumière (18) et la deuxième extrémité du conduit de lumière (20), une surface d'enveloppe cylindrique, en particulier cylindrique circulaire, et le support (6 ; 36) est relié au conduit de lumière (4) via la surface d'enveloppe, **caractérisé en ce que** le support est formé sous la forme d'une clavette et dans lequel le logement de conduit de lumière du support (6 ; 36) est réalisé en symétrie de rotation et est en contact de façon uniforme avec la surface d'enveloppe du conduit de lumière (4) sur la circonférence du conduit de lumière (4), et dans lequel le logement de conduit de lumière est formé avec une pluralité de plaquettes de serrage précontraintes de façon élastique, qui fixent le conduit de lumière exclusivement par complémentarité de forces dans le support.

2. Dispositif d'éclairage selon la revendication 1, **caractérisé en ce qu'**au moins une plaquette de serrage (10) est contiguë en angle aigu à la surface d'enveloppe du conduit de lumière (4).

3. Dispositif d'éclairage selon la revendication 1 ou 2, **caractérisé en ce qu'**au moins une plaquette de serrage (10) contient un bord de plaquette (14) dont la géométrie est adaptée à un contour extérieur du conduit de lumière (4).

4. Dispositif d'éclairage selon l'une des revendications 1 à 3, **caractérisé en ce qu'**au moins une plaquette de serrage (10) serre le conduit de lumière (4) contre une surface d'appui.

5. Dispositif d'éclairage selon l'une des revendications 1 à 3, **caractérisé en ce que** les plaquettes de serrage sont en contact de façon uniforme avec le conduit de lumière (4) sur la circonférence du conduit de lumière (4).

6. Dispositif d'éclairage selon l'une des revendications 1 à 5, **caractérisé en ce que** la surface de la surface d'enveloppe du conduit de lumière (4) présente, dans une section de contact (16) du conduit de lumière (4), une rugosité de surface accrue/un coefficient de rugosité accru par rapport à une section sans contact du conduit de lumière (4).

7. Dispositif d'éclairage selon l'une des revendications 1 à 6, **caractérisé en ce que** le support (6 ; 36) est formé en symétrie de rotation par rapport à une fibre centrale du logement de conduit de lumière.

8. Dispositif d'éclairage selon l'une des revendications 1 à 7, **caractérisé en ce que** le support (6 ; 36) est formé en une seule pièce.

9. Dispositif d'éclairage selon l'une des revendications 1 à 8, **caractérisé en ce qu'**une géométrie extérieure (8 ; 38) du support (6) éloignée du conduit de lumière (4) est prévue et formée pour fixer le dispositif de conduit de lumière (2 ; 32) dans un dispositif d'éclairage de l'appareil ménager.
